# FASCICULE DE BREVET EUROPEEN

(11) **EP 1 835 218 B1**
(45) Date de publication et mention de la délivrance du brevet: **08.07.2009**
(21) Numéro de dépôt: 07290228.1
(22) Date de dépôt: 22.02.2007
(51) Int. Cl.: F16L 17/02, F16L 21/06

(54) **Manchette d'etancheite pour jonction tubulaire et jonction tubulaire correspondante**
Rohrkupplung zum abgedichteten verbinden zweier Rohre
Sealing sleeve for tubular pipe coupling

(30) Priorité: 13.03.2006 FR 0602187
(43) Date de publication de la demande: 19.09.2007
(73) Titulaire: Saint-Gobain PAM, 54000 Nancy (FR)
(72) Inventeur: Genelot, Pierre, 54700 Norroy (FR); Percebois, Alain, 54700 Blenod les Pont-à-Mousson (FR); Forfert, Michel, 57590 Delme (FR)
(74) Mandataire: Blot, Philippe Robert Emile

(56) Documents cités:
- DE-A1- 19 542 463
- US-A- 3 183 021
- US-A1- 2005 258 641

## Description

La présente invention concerne une manette d'étanchéité selon le préambule de la revendication 1.

Elle s'applique notamment aux jonctions tubulaires de canalisations transportant de l'eau potable ou des eaux usées et qui sont destinées à être posées dans un environnement agressif.

Des garnitures d'étanchéité sont connues de DE 195 42 463 et US 2005/258 641.

Les jonctions tubulaires sont habituellement constituées d'un bout à emboîtement dans lequel est emmanché un bout uni.

On connaît dans l'état de la technique des manchettes d'étanchéité adaptées pour être enfilées sur une telle jonction tubulaire, afin de protéger la jonction d'éventuelles salissures ou de protéger la surface de la jonction contre des environnements agressifs.

Lors du montage, ces manchettes sont souvent graissées, afin de faciliter le passage sur le bout à emboîtement. En conséquence, la manchette a tendance à s'échapper de la main du monteur, est est de ce fait difficile à monter.

L'invention a pour objet de pallier cet inconvénient et de faciliter le montage de la manchette d'étanchéité.

A cet effet, la présente invention a pour objet une manchette d'étanchéité du type précité, caractérisée en ce qu'elle comporte une partie de préhension munie d'au moins un organe de préhension, qui est constitué par un trou traversant.

Selon des modes particuliers de réalisation, la manchette comprend une ou plusieurs des caractéristiques suivantes :
- la partie de préhension est disposée adjacente au second tronçon d'étanchéité et forme un tronçon annulaire de préhension qui est muni du ou de chaque organe de préhension ;
- le second tronçon d'étanchéité comporte au moins deux secondes lèvres d'étanchéité circonférentielles et décalées axialement, et le second tronçon d'étanchéité comporte au moins une lèvre d'étanchéité auxiliaire s'étendant avec une composante axiale et reliant les secondes lèvres d'étanchéité entre elles ;
- la manchette comporte un troisième tronçon d'étanchéité ayant des troisièmes lèvres d'étanchéité circonférentielles et ayant un troisième diamètre intérieur, différent des premier et second diamètres intérieurs ;
- la manchette est fabriquée en une matière élastique, notamment en élastomère ;
- la manchette est fabriquée en une seule pièce, notamment par moulage ; et
- les premières et/ou secondes lèvres d'étanchéité ont des crêtes arrondies, notamment d'un rayon de courbure d'au moins 0,5 mm.
- elle est adaptée pour être enfilée sur une jonction tubulaire entre un bout uni et un bout à emboîtement, et la première lèvre d'étanchéité est adaptée pour s'appliquer sur le bout uni et la deuxième lèvre d'étanchéité est adaptée pour s'appliquer sur le bout à emboîtement, et
- le second diamètre intérieur est supérieur au premier diamètre intérieur.

L'invention a en outre pour objet une jonction tubulaire du type comprenant un bout uni d'un premier élément de canalisation, enfiché dans un bout à emboîtement d'un second élément de canalisation et une manchette d'étanchéité annulaire s'appliquant sur le bout uni et le bout à emboîtement, caractérisée en ce que la manchette d'étanchéité est une manchette d'étanchéité telle que décrite ci-dessus.

Selon un mode particulier de réalisation, la jonction tubulaire comporte la caractéristique suivante :
- le bout à emboîtement définit un second axe central et comprend une collerette dont la hauteur radiale par rapport au second axe central est supérieure à son épaisseur axiale par rapport au second axe central, le second tronçon d'étanchéité s'appliquant sur cette collerette.

L'invention sera mieux comprise à la lecture de la description qui va suivre, donnée uniquement à titre d'exemple et faite en se référant aux dessins annexés, sur lesquels :
- la figure 1 est une vue en coupe longitudinale d'une jonction tubulaire selon un premier mode de réalisation de l'invention ;
- la figure 2 représente une jonction tubulaire selon un deuxième mode de réalisation de l'invention, la vue correspondant à la vue de la figure 1;
- la figure 3 est une vue en coupe axiale d'une manchette d'étanchéité selon l'invention, à l'état non monté ; et
- la figure 4 est une vue de l'extérieur et de côté d'une jonction tubulaire identique à celle de la figure 2, la manchette étant montée avec un décalage angulaire.

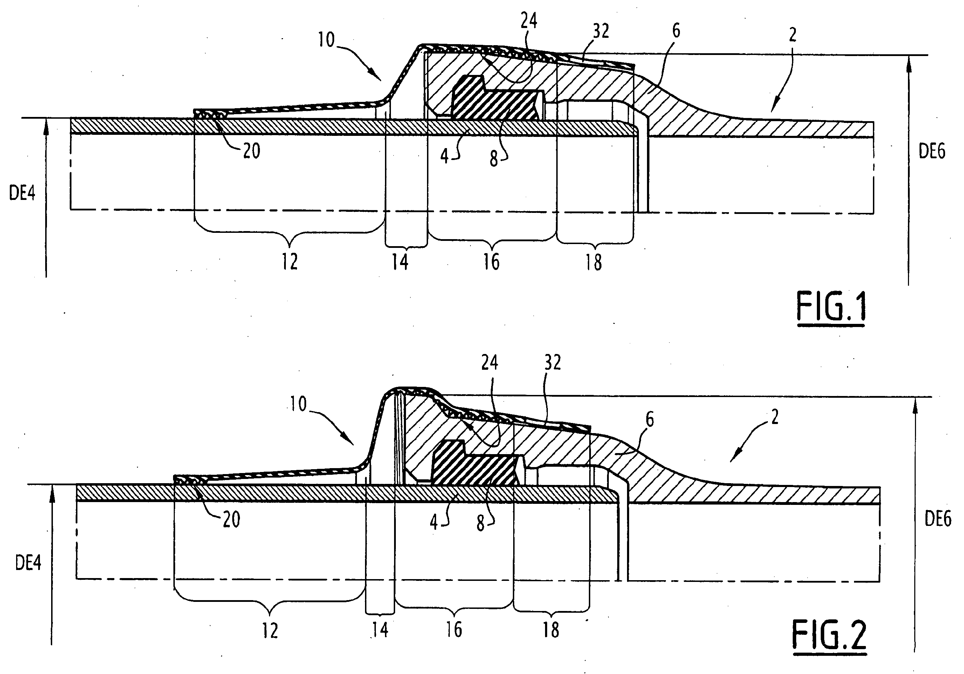

La figure 1 représente une jonction tubulaire selon l'invention, désignée par la référence générale 2.

La jonction tubulaire 2 comprend un bout uni 4 d'un premier élément de canalisation, qui est enfiché dans un bout à emboîtement 6 d'un second élément de canalisation, une garniture d'étanchéité 8 annulaire, disposée dans le bout à emboîtement 6 et s'appliquant sur le bout uni 4, ainsi qu'une manchette d'étanchéité 10 de forme générale annulaire.

La manchette 10 définit un premier axe central X-X. Dans ce qui suit, les expressions « axialement », « radialement » et « circonférentiellement » seront utilisées par rapport à cet axe X-X. La manchette d'étanchéité 10 s'applique d'une part sur la surface extérieure du bout uni 4 et d'autre part sur la surface extérieure du bout à emboîtement 6 afin de séparer la portion de transition entre le bout uni 4 et le bout à emboîtement 6 de l'environnement extérieur.

A cet effet, la manchette d'étanchéité 10 comporte un premier tronçon d'étanchéité 12, une partie de transition 14 et un second tronçon d'étanchéité 16. Par ailleurs, la manchette d'étanchéité 10 comporte une partie de préhension 18 située axialement à l'opposé du premier tronçon d'étanchéité 12.

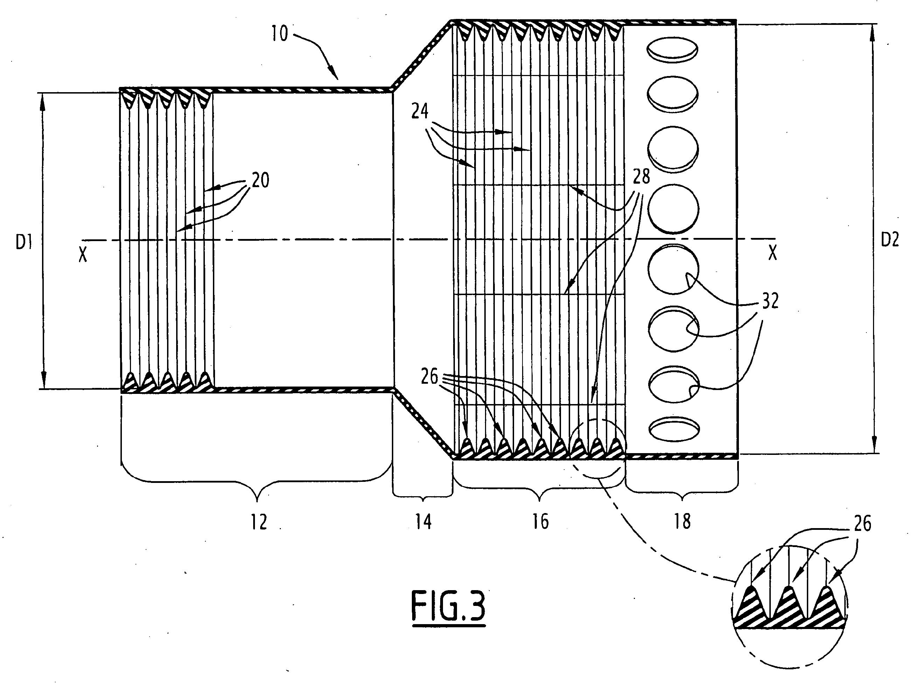

La manchette d'étanchéité 10 à l'état non monté est représentée selon une coupe axiale sur la figure 3.

Le premier tronçon d'étanchéité 12 a un premier diamètre intérieur D1 qui est à l'état non monté inférieur au diamètre extérieur DE4 du bout uni 4 et est muni d'une première série de lèvres d'étanchéité 20 annulaires. Les premières lèvres d'étanchéité 20 sont disposées sur la surface intérieure du premier tronçon d'étanchéité 12, s'étendent sur toute la circonférence de ce tronçon 12, et s'appliquent à l'état monté sur la surface extérieure du bout uni 4. En l'occurrence, le tronçon d'étanchéité 12 comporte cinq premières lèvres d'étanchéité 20. De plus, les premières lèvres d'étanchéité 20 sont disposées à l'extrémité axiale du premier tronçon d'étanchéité 12, du côté éloigné de la partie de transition 14.

La partie de transition 14 est une partie de forme tronconique ayant un premier diamètre intérieur qui est égal au diamètre intérieur D1 du premier tronçon d'étanchéité 12 et un second diamètre intérieur D2 qui est supérieur au premier diamètre D1. Cette partie de transition 14 a des surfaces intérieure et extérieure lisses.

Le diamètre intérieur du second tronçon d'étanchéité 16 est égal au second diamètre intérieur D2. A l'état non monté, le diamètre D2 est inférieur au plus grand diamètre extérieur DE6 du bout à emboîtement 6. Le second tronçon 16 comporte sur sa surface intérieure une deuxième série de lèvres d'étanchéité 24 annulaires. Ces deuxièmes lèvres d'étanchéité 24 s'étendent circonférentiellement sur toute la circonférence du deuxième tronçon d'étanchéité 16, et s'appliquent à l'état monté sur la surface extérieure du bout à emboîtement 6.

Par ailleurs, les lèvres d'étanchéité 24 forment des crêtes 26 dirigées radialement vers l'intérieur.

En outre, le second tronçon d'étanchéité 16 comporte des lèvres d'étanchéité auxiliaires 28 qui s'étendent axialement par rapport à l'axe X-X et qui relient les crêtes 26 des deuxièmes lèvres d'étanchéité 24 adjacentes.

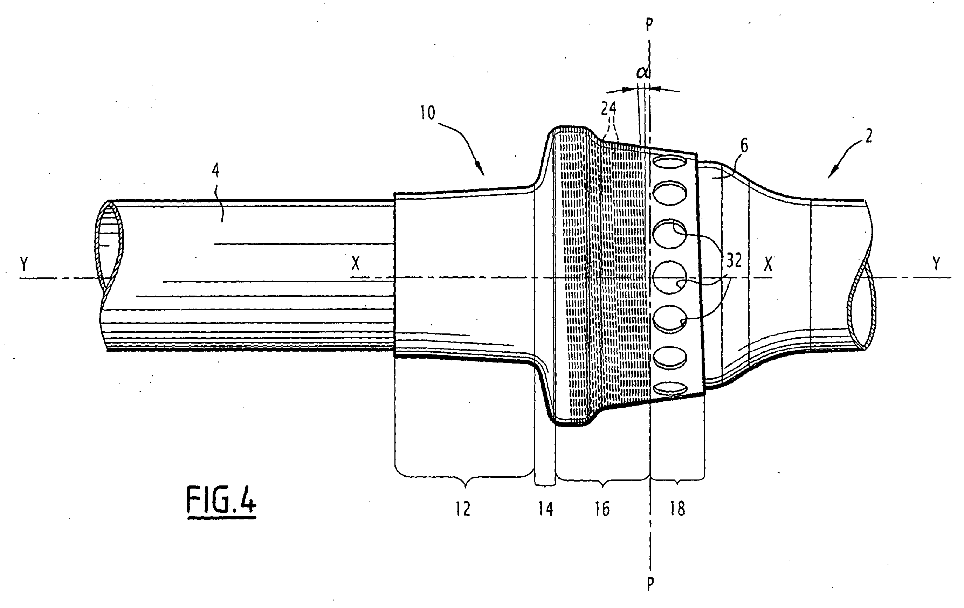

Grâce à ces lèvres d'étanchéité auxiliaires 28, la pénétration de liquide de l'extérieur dans la jonction 2 est empêchée, les lèvres d'étanchéité auxiliaires 28 formant des barrières d'écoulement circonférentiel de liquide dans les interstices formés entre les secondes lèvres d'étanchéité 24 (voir figure 4). Ainsi, même dans le cas où la manchette 10 est montée avec un décalage angulaire ∝ par rapport à un plan P-P, qui s'étend perpendiculairement à un second axe central Y-Y défini par le bout à emboîtement 6, du liquide ne peut pas pénétrer dans l'interstice formé entre le bout uni 4 et le bout à emboîtement 6.

En l'occurrence, dans le cas présent, l'axe central Y-Y constitue également l'axe de la jonction tubulaire 2.

En se référant de nouveau à la figure 3, on voit que la partie de préhension 18 est un tronçon annulaire qui se raccorde axialement au second tronçon d'étanchéité 16 du côté opposé à la partie de transition 14. La partie de préhension 18 comporte une série d'organes de préhension sous forme de trous de préhension 32, qui sont radialement traversants et qui sont répartis régulièrement sur la circonférence de la partie de préhension 18. En l'occurrence, la partie de préhension comporte seize trous de préhension. Par ailleurs, la partie de préhension 18 a un diamètre intérieur D2 qui est égal à celui du second tronçon d'étanchéité 16.

De manière avantageuse, et comme ceci est en particulier représenté sur la partie agrandie de la figure 3, les lèvres d'étanchéité 20 du premier tronçon d'étanchéité 12 et/ou les lèvres d'étanchéité 24 du second tronçon d'étanchéité 16 ont des crêtes 26 arrondies, dont le rayon de courbure est notamment d'au moins 0,5 mm. Une lèvre d'étanchéité 20 ou 24 munie d'une telle crête 26 arrondie peut difficilement se plier sur sa circonférence selon des sens différents, augmentant ainsi la fiabilité de l'étanchéité réalisée par la manchette 10.

De préférence, la manchette d'étanchéité 10 est fabriquée entièrement en une matière élastique, par exemple en élastomère. En outre, avantageusement, la manchette d'étanchéité 10 est fabriquée par moulage.

Sur la figure 2 est représentée une jonction tubulaire 2 dont le diamètre extérieur DE6 du bout à emboîtement 6 est supérieur à celui du diamètre DE6 du bout à emboîtement de la jonction tubulaire 2 de la figure 1. La manchette d'étanchéité est particulièrement facile à monter sur ce type de jonction grâce aux trous de préhension 32 qui permettent à l'opérateur de saisir la manchette 10 par les trous et de la tirer sur le bout à emboîtement.

Selon une variante non représentée, la manchette d'étanchéité 10 comporte un troisième tronçon d'étanchéité ayant un troisième diamètre intérieur qui est différent des premier et second diamètres intérieurs des tronçons 12 et 16, et qui comporte des troisièmes lèvres d'étanchéité circonférentielles analogues aux première 20 et seconde 24 lèvres d'étanchéité.

Ainsi, la manchette d'étanchéité 10 s'adapte à des jonctions tubulaires dont les bouts à emboîtement ont des diamètres extérieurs différents.

Egalement, selon une variante non représentée, le bout à emboîtement comprend une collerette dont la hauteur radiale est supérieure à l'épaisseur axiale, le second tronçon d'étanchéité s'appliquant sur la collerette. La manchette d'étanchéité 10 selon l'invention est également particulièrement adaptée pour ce genre de jonction, étant donné que les organes de préhension 32 facilitent sa mise en place sur la collerette.

En résumé, la manchette d'étanchéité 10 selon l'invention fournit une étanchéité fiable tout en étant facile à mettre en place et économique à fabriquer.

## Revendications

1. Manchette d'étanchéité (10) annulaire définissant un premier axe central (X-X) et adaptée pour être enfilée sur une jonction tubulaire (2), du type comprenant un premier tronçon d'étanchéité (12) ayant un premier diamètre intérieur (D1) et muni d'au moins une première lèvre d'étanchéité (20), un second tronçon d'étanchéité (16) ayant un second diamètre intérieur (D2), différent du premier diamètre intérieur (D1), et muni d'au moins une seconde lèvre d'étanchéité (24), **caractérisée en ce qu'**elle comporte une partie de préhension (18) munie d'au moins un organe de préhension (32), et **en ce que** l'organe de préhension est constitué par un trou traversant (32).

2. Manchette d'étanchéité selon la revendication 1, **caractérisée en ce que** la partie de préhension (98) est disposée adjacente au second tronçon d'étanchéité (16) et forme un tronçon annulaire de préhension (18) qui est muni du ou de chaque organe de préhension (32).

3. Manchette d'étanchéité selon l'une quelconque des revendications 1 ou 2, **caractérisée en ce que** le second tronçon d'étanchéité (16) comporte au moins deux secondes lèvres d'étanchéité (24) circonférentielles et décalées axialement, et **en ce que** le second tronçon d'étanchéité (16) comporte au moins une lèvre d'étanchéité auxiliaire (28) s'étendant avec une composante axiale et reliant les secondes lèvres d'étanchéité (24) entre elles.

4. Manchette d'étanchéité selon l'une quelconque des revendications 1 à 3, **caractérisée en ce que** la manchette (10) comporte un troisième tronçon d'étanchéité ayant des troisièmes lèvres d'étanchéité circonférentielles et ayant un troisième diamètre intérieur, différent des premier (D1) et second (D2) diamètres intérieurs.

5. Manchette d'étanchéité selon l'une quelconque des revendications 1 à 4, **caractérisée en ce que** la manchette (10) est fabriquée en une matière élastique, notamment en élastomère.

6. Manchette d'étanchéité selon l'une quelconque des revendications 1 à 5, **caractérisée en ce que** la manchette (10) est fabriquée en une seule pièce, notamment par moulage.

7. Manchette d'étanchéité selon l'une quelconque des revendications 1 à 6, **caractérisée en ce que** les premières et/ou secondes lèvres d'étanchéité (20, 24) ont des crêtes arrondies (26), notamment d'un rayon de courbure d'au moins 0,5 mm.

8. Manchette d'étanchéité selon l'une quelconque des revendications 1 à 7, **caractérisée en ce qu'**elle est adaptée pour être enfilée sur une jonction tubulaire entre un bout uni (4) et un bout à emboîtement (6), **en ce que** la première lèvre d'étanchéité (20) est adaptée pour s'appliquer sur le bout uni et la deuxième lèvre d'étanchéité (24) est adaptée pour s'appliquer sur le bout à emboîtement.

9. Manchette d'étanchéité selon l'une quelconque des revendications 1 à 8, **caractérisée en ce que** le second diamètre intérieur (D2) est supérieur au premier diamètre intérieur (D1).

10. Jonction tubulaire, du type comprenant un bout uni (4) d'un premier élément de banalisation, enfiché dans un bout à emboîtement (6) d'un second élément de canalisation et une manchette d'étanchéité annulaire s'appliquant sur le bout uni (4) et le bout à emboîtement (6), **caractérisée en ce que** la manchette d'étanchéité est une manchette d'étanchéité (10) selon l'une quelconque des revendications précédentes.

11. Jonction tubulaire selon la revendication 10, **caractérisée en ce que** le bout à emboîtement (6) définit un second axe central (Y-Y) et comprend une collerette dont la hauteur radiale par rapport au second axe central (Y-Y) est supérieure à son épaisseur axiale par rapport au second axe central (Y-Y), le second tronçon d'étanchéité s'appliquant sur cette collerette.

## Claims

1. Annular sealing sleeve (10) defining a first central axis (X-X) and designed to be slipped onto a tubular joint (2), of the type comprising a first sealing portion (12), having a first internal diameter (D1) and provided with at least one first sealing lip (20), a second sealing portion (16) having a second internal diameter (D2), which is different from the first internal diameter (D1), and provided with at least one second sealing lip (24), **characterised in that** it comprises a gripping part (18) provided with at least one gripping member (32) and **in that** the gripping member consists of a through-hole (32).

2. Sealing sleeve according to Claim 1, **characterised in that** the gripping part (18) is arranged adjacent to the second sealing portion (16) and forms an annular gripping portion (18) which is provided with the, or with each, gripping member (32).

3. Sealing sleeve according to any one of Claims 1 or 2, **characterised in that** the second sealing portion (16) comprises at least two second circumferential sealing lips (24) which are axially offset, and **in that** the second sealing portion (16) comprises at least one auxiliary sealing lip (28) extending with an axial component and connecting the second sealing lips (24) to one another.

4. Sealing sleeve according to any one of Claims 1 to 3, **characterised in that** the sleeve (10) comprises a third sealing portion having third circumferential sealing lips, and having a third internal diameter, which is different from the first (D1) and second (D2) internal diameters.

5. Sealing sleeve according to any one of Claims 1 to 4, **characterised in that** the sleeve (10) is manufactured from a resilient material, in particular from elastomer.

6. Sealing sleeve according to any one of Claims 1 to 5, **characterised in that** the sleeve (10) is manufactured in a single piece, in particular by moulding.

7. Sealing sleeve according to any one of Claims 1 to 6, **characterised in that** the first and/or second sealing lips (20, 24) have rounded ridges (26), in particular with a radius of curvature of at least 0.5 mm.

8. Sealing sleeve according to any one of Claims 1 to 7, **characterised in that** it is designed to be slipped over a tubular joint between a male end (4) and a female end (6), **in that** the first sealing lip (20) is designed to be applied to the male end and the second sealing lip (24) is designed to be applied to the female end.

9. Sealing sleeve according to any one of Claims 1 to 8, **characterised in that** the second internal diameter (D2) is greater than the first internal diameter (D1).

10. Tubular joint, of the type comprising a male end (4) of a first pipe element, plugged into a female end (6) of a second pipe element and an annular sealing sleeve applied to the male end (4) and the female end (6), **characterised in that** the sealing sleeve is a sealing sleeve (10) according to any one of the preceding claims.

11. Tubular joint according to Claim 10, **characterised in that** the female end (6) defines a second central axis (Y-Y) and comprises a flange of which the radial height relative to the second central axis (Y-Y) is greater than its axial thickness relative to the second central axis (Y-Y), the second sealing portion being applied to said flange.

## Patentansprüche

1. Ringförmige Dichtungsmanschette (10), die eine erste zentrale Achse (X-X) definiert und dazu ausgelegt ist, an eine Rohrkupplung (2) angesetzt zu werden, des Typs, der einen ersten Dichtungsabschnitt (12) mit einem ersten Innendurchmesser (D1) und mit mindestens einer ersten Dichtungslippe (20), einen zweiten Dichtungsabschnitt (16) mit einem zweiten, von dem ersten Innendurchmesser (D1) verschiedenen Innendurchmesser (D2) und versehen mit mindestens einer zweiten Dichtungslippe (24) einschließt, **dadurch gekennzeichnet, dass** sie einen Greif-Teil (18) einschließt, der mit mindestens einem Greiforgan (32) versehen ist, und **dadurch**, dass das Greiforgan aus einer durchgehenden Bohrung (32) besteht.

2. Dichtungsmanschette nach Anspruch 1, **dadurch gekennzeichnet, dass** der Greif-Teil (18) unmittelbar im Anschluss an den zweiten Dichtungsabschnitt (16) angeordnet ist und einen ringförmiges Greif-Abschnitt (18) bildet, der mit dem oder mit jedem Greiforgan (32) versehen ist.

3. Dichtungsmanschette nach einem der Ansprüche 1 oder 2, **dadurch gekennzeichnet, dass** der zweite Dichtungsabschnitt (16) mindestens zwei zweite, zirkumferentielle und axial versetzte Dichtungslippen (24) einschließt und **dadurch**, dass der zweite Dichtungsabschnitt (16) mindestens eine Hilfs-Dichtungslippe (28) einschließt, die sich mit einer axialen Komponente ausdehnt und die die zweiten Dichtungslippen (24) untereinander verbindet.

4. Dichtungsmanschette nach einem der Ansprüche 1 bis 3, **dadurch gekennzeichnet, dass** die Manschette (10) einen dritten Dichtungsabschnitt mit dritten zirkumferentiellen Dichtungslippen und mit einem dritten Innendurchmesser, der von den ersten (D1) und zweiten (D2) Innendurchmessern verschieden ist, einschließt.

5. Dichtungsmanschette nach einem der Ansprüche 1 bis 4, **dadurch gekennzeichnet, dass** die Manschette (10) aus einem elastischen Material, insbesondere aus einem Elastomer, hergestellt ist.

6. Dichtungsmanschette nach einem der Ansprüche 1 bis 5, **dadurch gekennzeichnet, dass** die Manschette (10) aus einem einzigen Stück, insbesondere durch Preßformen, hergestellt ist.

7. Dichtungsmanschette nach einem der Ansprüche 1 bis 6, **dadurch gekennzeichnet, dass** die ersten und/oder zweiten Dichtungslippen (20, 24) abgerundete Kämme (26), insbesondere mit einem Krümmungsradius von mindestens 0,5 mm, aufweisen.

8. Dichtungsmanschette nach einem der Ansprüche 1 bis 7, **dadurch gekennzeichnet, dass** sie dazu ausgelegt ist, zwischen einem glatten Ende (4) und einem Aufsteckende (6) an eine Rohrkupplung angesetzt zu werden, **dadurch**, dass die erste Dichtungslippe (20) dazu ausgelegt ist, sich an das glatte Ende anzulegen und die zweite Dichtungslippe (24) dazu ausgelegt ist, sich an das Aufsteckende anzulegen.

9. Dichtungsmanschette nach einem der Ansprüche 1 bis 8, **dadurch gekennzeichnet, dass** der zweite Innendurchmesser (D2) größer ist als der erste Innendurchmesser (D1).

10. Rohrkupplung, des Typs, der ein glattes Ende (4) eines ersten Kanalisationselements, das in ein Aufsteckende (6) eines zweiten Kanalisationselements gesteckt ist, und eine ringförmige Dichtungsmanschette, die sich an das glatte Ende (4) und das Aufsteckende (6) anlegt, einschließt, **dadurch gekennzeichnet, dass** die Dichtungsmanschette eine Dichtungsmanschette (10) nach einem der vorhergehenden Ansprüche ist.

11. Rohrkupplung nach Anspruch 10, **dadurch gekennzeichnet, dass** das Aufsteckende (6) eine zweite zentrale Achse (Y-Y) definiert und einen Kragen einschließt, dessen radiale Höhe in Bezug auf die zweite zentrale Achse (Y-Y) größer ist als seine axiale Dicke in Bezug auf die zweite zentrale Achse (Y-Y), wobei sich der zweite Dichtungsabschnitt an diesen Kragen anlegt.
